# EUROPÄISCHE PATENTSCHRIFT

(11) **EP 0 959 407 B1**
(45) Veröffentlichungstag und Bekanntmachung des Hinweises auf die Patenterteilung: **20.02.2008**
(21) Anmeldenummer: 99440075.2
(22) Anmeldetag: 16.04.1999
(51) Int. Cl.: G06F 9/46

(54) **Verfahren zum Zuteilen von Aufträgen Datenverarbeitungssystem, Client-Datenbearbeitungsknoten und computerlesbares Speichermedium**
Method for task allocation, data processing system, client data processing node and computer-readable storage medium
Procédé pour l'allocation de tâches, système de traitement de données, noeud-client de traitement de données et medium de stockage lisible par ordinateur

(30) Priorität: 20.05.1998 DE 19822543
(43) Veröffentlichungstag der Anmeldung: 24.11.1999
(73) Patentinhaber: Alcatel Lucent, 75008 Paris (FR)
(72) Erfinder: Staiger, Wolfgang, 72827 Wannheil (DE); Bauer, Rolf, Dr., 70825 Korntal (DE)
(74) Vertreter: Schmidt, Werner Karl

(56) Entgegenhaltungen:
- EP-A- 0 692 763
- US-A- 5 341 477
- EPEMA D H J ET AL: "A worldwide flock of Condors: Load sharing among workstation clusters" FUTURE GENERATIONS COMPUTER SYSTEMS, ELSEVIER SCIENCE PUBLISHERS. AMSTERDAM, NL, Bd. 12, Nr. 1, 1. Mai 1996 (1996-05-01), Seiten 53-65, XP004018257 ISSN: 0167-739X
- "WORKLOAD BALANCING IN A DISTRIBUTED ENVIRONMENT" IBM TECHNICAL DISCLOSURE BULLETIN, IBM CORP. NEW YORK, US, Bd. 38, Nr. 11, 1. November 1995 (1995-11-01), Seiten 273-276, XP000547363 ISSN: 0018-8689
- STAMOULIS G D ET AL: "Optimal distributed policies for choosing among multiple servers" PROCEEDINGS OF THE CONFERENCE ON DECISION AND CONTROL. BRIGHTON, DEC. 11 - 13, 1991, NEW YORK, IEEE, US, Bd. VOL. 1 CONF. 30, 11. Dezember 1991 (1991-12-11), Seiten 815-820, XP010055580 ISBN: 0-7803-0450-0

## Beschreibung

Die Erfindung betrifft ein Verfahren zum Zuteilen von Aufträgen innerhalb einer Gruppe von zwei oder mehreren Server-Datenbearbeitungsknoten nach dem Oberbegriff von Anspruch 1, ein Datenverarbeitungssystem nach dem Oberbegriff von Anspruch 7, einen Client-Datenbearbeitungsknoten nach dem Oberbegriff von Anspruch 8 und ein computerlesbares Speichermedium nach dem Oberbegriff von Anspruch 9.

Die Erfindung geht von einem bei Client-Server Anwendungen bekannten Lastverteilungsverfnhren aus.

Solche Lostverteilungsverfahren sind beispielsweise aus der Europäischen Patentanmeldung EP 0 692 763 A1 bekannt. Dort ist unter anderem ein Lostverteilungsverfahren beschrieben bei dem ein Server-Datenbearbeitungsknoten zufällig aus einer Menge ausgewählte wird.

In einem alternativen Verfahren wird ein Server-Datenbeorbeitungsknoten anhand einer zyklischen Reihenfolge ermittelt. Gleichfalls wird ein Verfahren vorgeschlagen, bei dem die Prognosen über die Serverauslastungen ermittelt und an die Client-Patenbearbeitungsknoten verteilt werden um die Auswahl zu verbessern.

In der Publikation von D.H.J. Eperna et al., ,,A worldwide flock of Condors: Load sharing among workstation clusters" wird ein Verteiltes System von Server-Dotenbearbeitungsknoten und "Gateway Machines"' beschrieben, das ein lastenbalancierendes Verteiltes System für berechnungsintensive Aufgaben bereitstellt.

Das US-Patent 5,341,477 beschreibt ein weiteres Lastverteilungsverfahren in dem ein sogenannter Broker bei der Auswahl eines Server-Datenbearbeitungsknoten zum Einsatz kommt.

Ein Client-Rechner ist über ein Kommunikationsnetz mit mehreren Server-Rechnern verbunden. Die Server-Rechner senden dem Client-Rechner periodisch Nachrichten zu, die Auskunft über deren Auslastung geben. Dieser so übermittelten Informationen werden im Client-Rechner gespeichert. Hat der Client-Rechner einen Datenverarbeitungsauftrag zu vergeben, so wählt er mittels der gespeicherten Auslastungs-Informationen der Server-Rechner denjenigen Server-Rechner aus, der am wenigsten ausgelastet ist. Dem so ausgewählten Server-Rechner teilt er sodann den Auftrag zu, indem er an ihn eine Anforderungsnachricht zur Bearbeitung des Datenbearbeitungsauftrages senden und ihm damit den Datenbearbeitungsauftrag zur Bearbeitung übergibt. Hierdurch wird erreicht, daß die Server-Rechner gleichmäßig ausgelastet werden.

Der Nachteil dieses Verfahrens besteht darin, daß es eine hohe Verkehrsbelastung des Kommunikationsnetzes bedingt. Sämtliche Server-Rechner müssen periodisch Nachrichten senden. Um ein aktuelles Bild der Auslastung zu erhalten, darf hierbei die Periode nicht zu groß gewählt werden.

Der Erfindung liegt nun die Aufgabe zugrunde, Aufträge von Client-Datenbearbeitungsknoten Server-Datenbearbeitungsknoten bei möglichst gleichmäßiger Auslastung der Server-Datenbearbeitungsknoten und möglichst geringem Kommunikationsverkehr zwischen Client- und Server-Datenbearbeitungsknoten zuzuordnen.

Diese Aufgabe wird gelöst durch ein Verfahren zum Zuteilen von Aufträgen innerhalb einer Gruppe von zwei oder mehreren Server-Datenbearbeitungsknoten nach der Lehre von Anspruch 1, ein Datenverarbeitungssystem nach der Lehre von Anspruch 7, einen Client-Datenbearbeitungsknoten nach der Lehre von Anspruch 8 und ein computerlesbares Speichermedium nach der Lehre von Anspruch 9.

Client- und Server-Datenbearbeitungsknoten können hierbei von verschiedenen Rechnern eines Mehrrechnersystems, von verschiedenen Prozessoren eines Mehrprozessorsystems oder von verschiedenen Prozessen oder Objekten gebildet werden, die auf einer Systemplattform aufsetzen.

Der Erfindung liegt der Gedanke zugrunde, zuerst zu versuchen, einen Auftrag einem zyklisch ausgewählten Server-Datenbearbeitungsknoten zuzuordnen, und, wenn dieser den Auftragt nicht akzeptiert (weil er bereits ausgelastet ist), als nächstes ein oder mehrmals zu versuchen, den Auftrag einem zufällig ausgewählten Server-Datenbearbeitungsknoten zuzuordnen. Einem ersten zyklischen Zuordnungsversuch folgen somit ein oder mehrere zufällige Zuordnungsversuche.

Versuche haben ergeben, daß durch dieses spezielle Zuordnungsschema in allen Lastbereichen eine sehr gleichmäßige Auslastung der Server-Datenbearbeitungsknoten erreicht und die Anzahl der notwendigen Zuordnungsversuche minimiert wird. Weiter ist das Zuordnungsschema mit geringem Rechenaufwand durchzuführen, der weitgehend unabhängig von der Anzahl der Client- und Server-Datenbearbeitungsknoten des Datenverarbeitungssystems ist. Das erfindungsgemäße Verfahren vereinigt somit sehr gute Performance mit geringem technischen Aufwand.

Ein weiterer Vorteil der Erfindung besteht darin, daß nur bei der Zuordnung eines Auftrages der Austausch von ein oder mehreren Nachrichten notwendig wird, ansonsten ist kein weiterer Informationsaustausch zwischen Client- und Server-Datenbearbeitungsknoten notwendig. Insbesondere bei einer größeren Anzahl von Client- und Server-Datenbearbeitungsknoten verringert sich dadurch die Kommunikationslast erheblich.

Vorteilhafte Ausgestaltungen der Erfindung sind den Unteransprüchen zu entnehmen.

Es ist hierbei vor allem vorteilhaft, wenn die Client-Datenbearbeitungsknoten die zyklische Auswahl unabhängig voneinander vornehmen. Dadurch ist keine Synchronisation zwischen den Client-Datenbearbeitungsknoten notwendig.

Im folgenden wir die Erfindung anhand eines Ausführungsbeispiels unter Zuhilfenahme beiliegender Zeichnungen beispielhaft erläutert.
- Fig. 1: zeigt ein Blockschaltbild eines erfindungsgemäßen Datenverarbeitungssystems mit erfindungsgemäßen Client-Datenbearbeitungsknoten.
- Fig. 2: zeigt eine funktionelle Darstellung eines Ausschnittes des erfindungsgemäßen Datenverarbeitungssystems nach Fig. 1 mit einem erfindungsgemäßen Client-Datenbearbeitungsknoten.
- Fig. 3: zeigt ein Flußdiagramm, das das vom Client-Datenbearbeitungsknoten nach Fig. 2 durchgeführte Verfahren beschreibt.

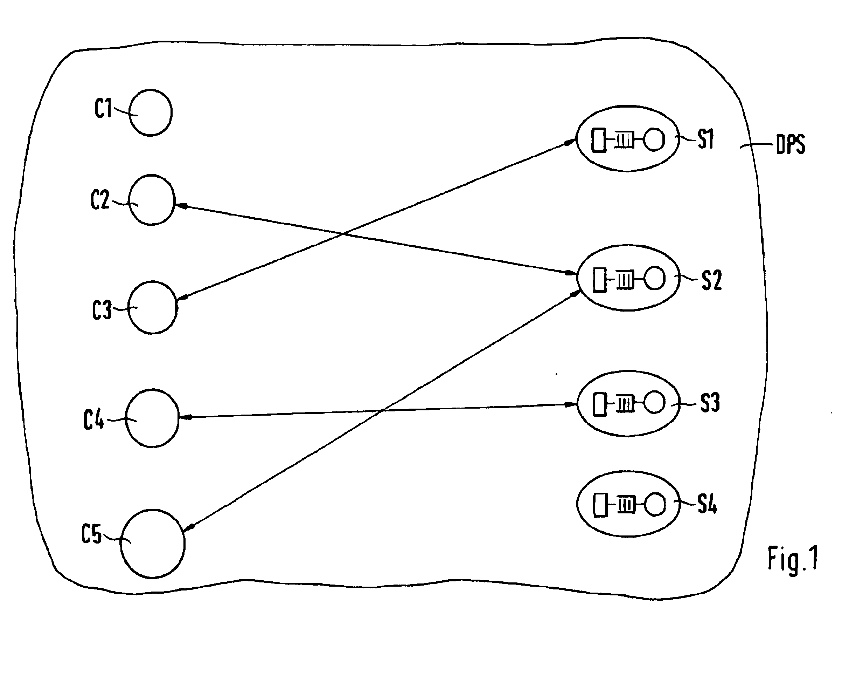

Fig. 1 zeigt ein Datenverarbeitungssystem DPS mit mehreren Client-Datenbearbeitungsknoten C1 bis C5 und mit mehrere Server-Datenbearbeitungsknoten S1 bis S4, die miteinander kommunizieren.

Das Datenverarbeitungssystem DPS ist ein Mehrrechnersystem und realisiert einen Teil einer verteilten Steuerung einer Vermittlungsstelle. Es ist natürlich auch möglich, daß das Datenverarbeitungssystem DPS eine andere verteilte Steuerfunktion wahrnimmt.

Die Anzahl der Client- und Server-Datenbearbeitungsknoten ist beispielhaft gewählt, es sind jedoch zumindest zwei Server-Datenbearbeitungsknoten erforderlich. Jeder der Client-Datenbearbeitungsknoten C1 bis C5 und der Server-Datenbearbeitungsknoten S1 bis S4 wird von einem Rechner, der mindestens einen Prozessor, einen Speicher und periphere Kommunikationsbaugruppen aufweist, und auf diesem Rechner ablaufenden Programmen gebildet. Die Client- und die Server-Datenbearbeitungsknoten C1 bis C5 und S1 bis S4 sind über ein Kommunikationsnetz miteinander verbunden. Das Kommunikationsnetz wird hierbei von dem Koppelnetz der Vermittlungsstelle und mit diesem verbundenen Verbindungsleitungen zu den Server-Datenbearbeitungsknoten S1 bis S4 gebildet. Es kann sich hierbei aber auch um ein LAN (Local Area Network) oder ein beliebiges anderes Kommunikationsnetz zur Rechnerkommunikation handeln.

Die Client-Datenbearbeitungsknoten C1 bis C5 fordern bei der Erfüllung ihrer Funktion in regelmäßigen oder unregelmäßigen Abständen die Bearbeitung eines Auftrages von einem der Server-Datenbearbeitungsknoten S1 bis S4 an. In dem Beispiel nach Fig. 1 bearbeiten beispielsweise gerade die Server-Datenbearbeitungsknoten S1 bis S3 jeweils einen Auftrag der Client-Datenbearbeitungsknoten C3, C2 und C5, bzw. C4.

Die Server-Datenbearbeitungsknoten S1 bis S5 sind jeweils in der Lage, eine bestimmte Art von Aufträgen durchzuführen. Sie bilden somit eine Gruppe von Server-Datenbearbeitungsknoten, die in der Lage ist, eine bestimmte Art von Aufträgen durchzuführen. Ein solcher Auftrag besteht hierbei beispielsweise in der Durchführung einer bestimmten Berechnung für vorgegebene Startwerte, aus der Durchführung von Datenmanipulationen oder der Ansteuerung von physikalischen Elementen. Alle Server-Datenbearbeitungsknoten sind gleichermaßen in der Lage solche Aufträge durchzuführen. Die Server-Datenbearbeitungsknoten S1 bis S4 können hierbei, je nach den ihnen zur Verfügung stehenden Ressourcen, jeweils nur einen oder aber auch eine bestimmte Anzahl von Aufträgen gleichzeitig bearbeiten. Weiter ist es möglich, daß sie jeweils über eine Warteschlange für Aufträge verfügen, in der zur Bearbeitung anstehenden Aufträge zwischengespeichert werden.

Bei den Client-Datenbearbeitungsknoten C1 bis C5 kann es sich auch um verschiedene Prozesse oder Objekte eines Rechnersystems handeln, die von anderen Prozessen oder Objekten eines anderen oder desselben Rechnersystems die Durchführung von Aufgaben anfordern. Diese anderen Prozesse oder Objekte bilden hierbei die Server-Datenbearbeitungsknoten. Es ist hierbei vorteilhaft, daß die Server-Datenbearbeitungsknoten von Prozessen oder Objekten gebildet werden, die auf unterschiedlichen Rechnern ablaufen und somit in Bezug auf System-Ressourcen nicht in Konkurrenz zueinander stehen. Die Kommunikation zwischen solchen Datenbearbeitungsknoten kann beispielsweise über eine CORBA-Infrastruktur (CORBA = Common Object Request Broker Architecture) erfolgen.

Weiter ist es möglich, daß das Datenverarbeitungssystem DPS von einem Mehrprozessorsystem gebildet wird, in dem die Server-Datenbearbeitungsknoten verschiedene Prozessoren darstellen, an die von den Client-Datenbearbeitungsknoten C1 bis C5 Anforderungen für die Ausführung von Aufträgen gerichtet werden. Die Client-Datenbearbeitungsknoten C1 bis C5 stellen hierbei ebenfalls verschiedene Prozessoren oder aber auch verschiedene Prozesse eines oder mehrerer Prozessoren dar.

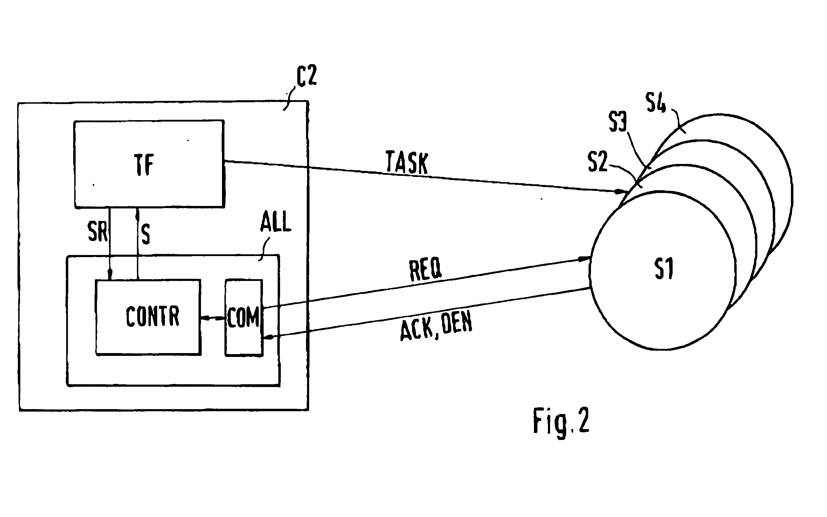

Anhand von Fig. 2 wird nun beispielhaft der funktionelle Aufbau eines Client-Datenbearbeitungsknotens anhand der Funktionsweise des Client-Datenbearbeitungsknoten C2 erläutert.

Fig. 2 zeigt den Client-Datenbearbeitungsknoten C2 und die Server-Datenbearbeitungsknoten S1 bis S4. Der Client-Datenbearbeitungsknoten C2 weist zwei Programm-Module TF und ALL auf.

Bei seiner Ausführung fordert das Programm-Modul TF die Ausführung einer bestimmten Aufgabe durch einen Client-Datenbearbeitungsknoten an und aktiviert hierzu mittels einer Anforderung SR das Programm-Modul ALL. Das Programm-Modul ALL bildet aus funktioneller Sicht eine Zuordnungseinheit und ermittelt denjenigen Server-Datenbearbeitungsknoten aus der Gruppe der Server-Datenbearbeitungsknoten S1 bis S4, an den der Auftrag zur Bearbeitung zu übergeben ist. Die Funktionen des Programm-Moduls ALL können natürlich auch in Hardware realisiert werden, was insbesondere von Vorteil ist, wenn es sich bei dem Datenverarbeitungssystem DPS um ein Mehrprozessorsystem handelt. Die Adresse S dieses Server-Datenbearbeitungsknotens übergibt sie sodann dem Programm-Modul TF, das mittels einer Nachricht TASK die Aufgabe zur Bearbeitung an diesen Server-Datenbearbeitungsknoten, hier den Server-Datenbearbeitungsknoten S2, übergibt.

Es ist auch möglich, daß die Aufgabe gleich mit der Nachricht REQ dem Server-Datenbearbeitungsknoten übergeben wird. Die Nachrichten REQ und TASK werden beispielsweise gemeinsam von dem Programm-Modul ALL an den Server-Datenbearbeitungsknoten S2 gesendet. Die Aufgabe wird bei einem solchen Ausführungsbeispiel zur Zuordnung von dem Programm-Modul TF an das Programm-Modul ALL übergeben und das Programm-Modul nimmt eigenständig die Übergabe der Bearbeitung der Aufgabe an einen Server-Datenbearbeitungsknoten vor oder teilt dem Programm-Modul TF mit, daß solch eine Übergabe im Augenblick nicht möglich ist. Durch die sofortige Übergabe der Aufgabe ist es auch möglich, daß der Server-Datenbearbeitungsknoten den für die Ausführung der Aufgabe notwendigen Aufwand genau bestimmt. Lehnt der Server-Datenbearbeitungsknoten die Ausführung der Aufgabe ab, so sendet er die Nachricht DEN an das Programm-Modul ALL. Auf das Senden der Nachricht ACK kann verzichtet werden.

Das Programm-Modul ALL weist aus funktioneller Sicht zwei Funktionsgruppen CONTR und COM auf. Die Funktionsgruppe COM weist diejenigen Funktionen auf, die dem Programm-Modul ALL auf der Systemplattform die Kommunikation mit den Server-Datenbearbeitungsknoten S1 bis S4 ermöglicht. Die Funktionsgruppe CONTR ermittelt mittels der Funktionen der Funktionsgruppe COM auf die Anforderung SR die Adresse S. Hierbei sendet sie mittels der Funktionsgruppe COM Nachrichten REQ an Server-Datenbearbeitungsknoten der Server-Datenbearbeitungsknoten S1 bis S4 und empfängt von diesen Nachrichten ACK und DEN.

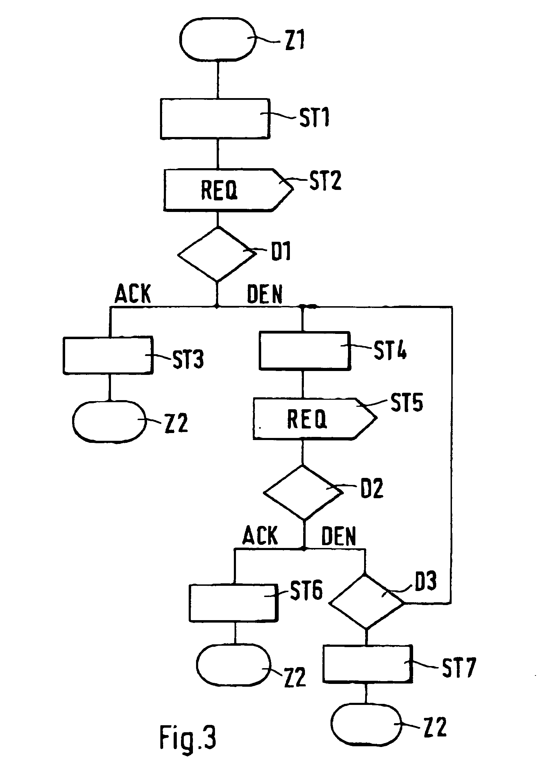

Die Funktionen der Funktionsgruppe CONTR werden nun anhand des in Fig. 3 gezeigten Ablaufdiagramms erläutert:

Fig. 3 zeigt zwei Zustände Z1 und Z2, sieben Schritte ST1 bis ST7 und drei Entscheidungsschritte D1 bis D3.

Auf die Anforderung SR wird von einem Wartezustand Z2 in den Startzustand Z1 übergegangen. Im Schritt ST1 wird daraufhin ein Server-Datenbearbeitungsknoten aus der Gruppe der Server-Datenbearbeitungsknoten S1 bis S4 ausgewählt, der gemäß einer vordefinierten zyklischen Reihenfolge der Server-Datenbearbeitungsknoten der nächste auszuwählende Server-Datenbearbeitungsknoten ist. Jedem der Server-Datenbearbeitungsknoten S1 bis S4 ist hierzu in aufsteigender Reihenfolge eine Zahl zugewiesen, den Server-Datenbearbeitungsknoten S1 bis S4 ist somit die Zahl 1, 2, 3 bzw. 4 zugeordnet. Bei jeder zyklischen Zuordnung durch den Client-Datenbearbeitungsknoten C2, also jedesmal, wenn der Schritt ST1 durchgeführt wird, wird ein Zähler um 1 inkrementiert, wobei der Zähler wieder auf eins gesetzt wird, wenn die fünf erreicht wird (Modulo-Addition). Der nächste zyklisch auszuwählende Server-Datenbearbeitungsknoten ist dann der Server-Datenbearbeitungsknoten, dem der neue Zählerwert zugeordnet ist.

Alternativ ist es auch möglich, die Adressen der Server-Datenbearbeitungsknoten in einer Liste in beliebiger Folge anzuordnen. Bei jeder zyklischen Zuordnung durch den Client-Datenbearbeitungsknoten C2 wird der Zeiger auf den nächsten Eintrag in der Liste gesetzt, wobei der Zeiger auf den ersten Listenplatz gesetzt wird, wenn das Ende der Liste erreicht ist. Der nächste zyklisch auszuwählende Server-Datenbearbeitungsknoten ist dann derjenige Server-Datenbearbeitungsknoten, auf dessen Adresse der Zeiger weist.

Es ist auch möglich, daß nur ein Zähler oder Zeiger für alle Client-Datenbearbeitungsknoten C1 bis C5 zur Verfügung steht, der jedesmal weitergesetzt wird, wenn einer der Client-Datenbearbeitungsknoten C1 bis C5 eine zyklische Auswahl vornimmt. Dadurch wird das Verhalten der Client-Datenbearbeitungsknoten C1 bis C5 synchronisiert.

Es ist weiter möglich, daß derjenige Server-Datenbearbeitungsknoten ausgewählt wird, der im Vergleich zum letzen Server-Datenbearbeitungsknoten, dem ein Auftrag zugeteilt wurde (was in den Schritten ST3 und ST6 durchgeführt wird), gemäß der vordefinierten Reihenfolge (durch Zahlenzuordnung, durch Listenplatz) der zyklisch als nächstes auszuwählende Server-Datenbearbeitungsknoten ist. Auch hier bestehen die Alternativen, von dem Server-Datenbearbeitungsknoten, dem ein Auftrag von diesem Client-Datenbearbeitungsknoten zugeteilt wurde oder vom letzten Server-Datenbearbeitungsknoten, dem ein Auftrag von irgendeinem der Client-Datenbearbeitungsknoten C 1 bis C5 zugeteilt wurde, auszugehen.

Im Schritt ST2 wird eine Anforderung REQ an den im Schritt ST1 zyklisch ausgewählten Server-Datenbearbeitungsknoten gesendet, die diesen auffordert zu erklären, ob er den Auftrag bearbeiten kann oder nicht. Kann dieser Server-Datenbearbeitungsknoten den Auftrag nicht Bearbeiten, weil er beispielsweise bereits mit der Bearbeitung anderer Aufträge ausgelastet ist oder seine Warteschlange voll gefüllt ist, so sendet er auf die Anforderung REQ eine Nachricht DEN zurück an den Client-Datenbearbeitungsknoten C2. Ansonsten sendet er ein Nachricht ACK zurück, mit der er der Bearbeitung des Auftrages zustimmt. Es ist hierbei auch möglich, daß der ausgewählte Server-Datenbearbeitungsknoten die Nachricht DEN bereits dann sendet, wenn seine Auslastung einen bestimmten Schwellwert übersteigt.

Wird die Nachricht ACK vom Client-Datenbearbeitungsknoten C2 empfangen, so wird im Entscheidungsschritt D1 auf den Schritt ST3 übergegangen. Beim Empfang der Nachricht DEN wird in den Schritt ST4 übergegangen.

Im Schritt ST3 wird die Adresse des zyklisch ausgewählten Server-Datenbearbeitungsknoten als Adresse S dem Programm-Modul TF übergeben, der Auftrag wird somit diesem Server-Datenbearbeitungsknoten zugeordnet. Anschließend wird in den Wartezustand Z2 übergegangen.

Im Schritt ST4 wird einer der anderen Server-Datenbearbeitungsknoten der Server-Datenbearbeitungsknoten S1 bis S4, der für diesen Auftrag noch nicht ausgewählt wurde, zufällig ausgewählt. Für die zufällige Auswahl wird ein Algorithmus verwendet, der pseudo zufällige Zahlen liefert. Es kann natürlich auch mittels eines Zufallsgenarators irgendeiner der Server-Datenbearbeitungsknoten S1 bis S4 ausgewählt werden. Hierbei ist es vorteilhaft, den zuletzt ausgewählten Serve-Datenbearbeitungsknoten nicht auszuwählen. Im Schritt ST5 wird sodann an den zufällig ausgewählten Server-Datenbearbeitungsknoten eine Anforderung REQ gesendet. Wird auf die Anforderung von diesem Server-Datenbearbeitungsknoten die Nachricht ACK empfangen, so wird im Entscheidungsschritt D2 in den Schritt ST6 verzweigt, wird die Nachricht DEN empfangen, wird in den Entscheidungsschritt D3 verzweigt.

Im Schritt ST6 wird die Adresse des zufällig ausgewählten Server-Datenbearbeitungsknoten als Adresse S dem Programm-Modul TF übergeben, der Auftrag wird somit diesem Server-Datenbearbeitungsknoten zugeordnet. Anschließend wird in den Wartezustand Z2 übergegangen.

Im Entscheidungsschritt D3 wird überprüft, ob die Anzahl der zufälligen Auswahlversuche eines Server-Datenbearbeitungsknotens eine vorher festgelegt Obergrenze erreicht hat. Beispielsweise ist es vorteilhaft, die Anzahl dieser Zuordnungsversuche bei einer Anzahl von 1000 Client-Datenbearbeitungsknoten und 255 Server-Datenbearbeitungsknoten auf 4 zu begrenzen. Ist dies nicht der Fall, so wird in den Schritt ST4 übergegangen und ansonsten in den Schritt ST7. Es ist auch möglich, daß nur ein einzige zufällige Zuordnung durchgeführt wird und somit der Entscheidungsschritt D3 entfallen kann.

Im Schritt ST7 übergibt das Programm-Modul ALL an das Programm-Modul TF eine Nachricht, die anzeigt, daß im Augenblick keine Zuordnung eines Server-Datenbearbeitungsknoten möglich ist. Anschließend wird in den Wartezustand Z2 übergegangen. Das Programm-Modul TF wird daraufhin nach einer vorbestimmten Wartezeit erneut einen Zuordnungsversuch initiieren.

## Patentansprüche

1. Verfahren um Aufträge, die von einem oder von mehreren Client-Datenbearbeitungsknoten (C1 bis C5) stammen, innerhalb einer Gruppe von zwei oder mehreren Server-Datenbearbeitungsknoten (S1 bis S4) jeweils einem der Server-Datenbearbeitungsknoten zur Bearbeitung zuzuteilen, wobei ein Client-Datenbearbeitungsknoten, der einen Auftrag zu vergeben hat, zuerst denjenigen Server-Datenbearbeitungsknoten aus der Gruppe auswählt, der gemäß einer vordefinierten zyklischen Reihenfolge der Server-Datenbearbeitungsknoten der nächste auszuwählende Server-Datenbearbeitungsknoten ist, **dadurch gekennzeichnet daß,** wenn der zuerst ausgewählte Server-Datenbearbeitungsknoten die Bearbeitung des Auftrages ablehnt, von dem Client-Datenbearbeitungsknoten mittels zufälliger Auswahl ein anderer Server-Datenbearbeitungsknoten der Gruppe zur Bearbeitung des Auftrages ausgewählt wird, und ansonsten dem ausgewählte Server-Datenbearbeitungsknoten der Auftrag von dem Client-Datenbearbeitungsknoten zur Bearbeitung übergeben wird.

2. Verfahren nach Anspruch 1, **dadurch gekennzeichnet, daß**, wenn der mittels zufälliger Auswahl ausgewählte Server-Datenbearbeitungsknoten die Bearbeitung des Auftrages ablehnt, wiederholt mittels zufälliger Auswahl versucht wird, einen andere Server-Datenbearbeitungsknoten zur Bearbeitung des Auftrages auszuwählen und diesem den Auftrag zur Bearbeitung zuteilt.

3. Verfahren nach einem der Ansprüche 1 oder 2, **dadurch gekennzeichnet, daß** von dem Client-Datenbearbeitungsknoten zuerst derjenige Server-Datenbearbeitungsknoten aus der Gruppe ausgewählt wird, der gemäß einer vordefinierten zyklischen Reihenfolge der Server-Datenbearbeitungsknoten im Vergleich zum letzen Server-Datenbearbeitungsknoten, dem ein Auftrag von diesem Client-Datenbearbeitungsknoten zur Bearbeitung übergeben wurde, der nächste auszuwählende Server- Datenbearbeitungsknoten ist.

4. Verfahren nach einem der Ansprüche 1 oder 2, **dadurch gekennzeichnet, daß** von dem Client-Datenbearbeitungsknoten zuerst derjenigen Server-Datenbearbeitungsknoten aus der Gruppe ausgewählt wird, der gemäß einer vordefinierten zyklischen Reihenfolge der Server-Datenbearbeitungsknoten im Vergleich zum letzen Server-Datenbearbeitungsknoten, dem ein Auftrag von einem der Client-Datenbearbeitungsknoten zur Bearbeitung übergeben wurde, der nächste auszuwählende Server-Datenbearbeitungsknoten ist.

5. Verfahren nach einem der Ansprüche 1 oder 2, **dadurch gekennzeichnet, daß** von dem Client-Datenbearbeitungsknoten zuerst derjenigen Server-Datenbearbeitungsknoten aus der Gruppe ausgewählt wird, der gemäß einer vordefinierten zyklischen Reihenfolge der Server-Datenbearbeitungsknoten im Vergleich zum letzen Server-Datenbearbeitungsknoten, der von diesem Client-Datenbearbeitungsknoten zyklisch ausgewählt wurde, der nächste auszuwählende Server-Datenbearbeitungsknoten ist.

6. Verfahren nach einem der Ansprüche 1 oder 2, **dadurch gekennzeichnet, daß** von dem Client-Datenbearbeitungsknoten zuerst derjenigen Server-Datenbearbeitungsknoten aus der Gruppe ausgewählt wird, der gemäß einer vordefinierten zyklischen Reihenfolge der Server-Datenbearbeitungsknoten im Vergleich zum letzen Server-Datenbearbeitungsknoten, der von einem der Client-Dotenbearbeitungsknoten zyklisch ausgewählt wurde, der nächste auszuwählende Server-Datenbearbeitungsknoten ist.

7. Datenverarbeitungssystem (DPS) mit einem oder mit mehreren Client-Datenbearbeitungknoten (C1 bis C5), die so ausgestaltet sind, daß sie die Bearbeitung von Aufträgen durch Server-Datenbearbeitungsknoten (S1 bis S4) anfordern und mit einer Gruppe von zwei oder mehreren Server-Datenbearbeitungsknoten (S1 bis S4), die so ausgestaltet sind, daß sie Aufträge, die ihnen zur Bearbeitung von den Server-Datenbearbeitungsknoten (S1 bis S4) zugeteilt werden, bearbeiten,
wobei jede der Client-Datenbearbeitungsknoten (C1 bis C5) jeweils mit einer Zuordnungseinheit (ALL) versehen ist, die so ausgestaltet ist, daß sie für einen von dem jeweiligen Client-Datenbearbeitungsknoten zu vergeben Auftrag zuerst denjenigen Server-Datenbearbeitungsknoten aus der Gruppe auswählt, der gemäß einer vordefinierten zyklischen Reihenfolge der Server-Datenbearbeitungsknoten der nächste auszuwählende Server-Datenbearbeitungsknoten ist, **dadurch gekennzeichnet daß** sie, wenn der zuerst ausgewählte Server-Datenbearbeitungsknoten die Bearbeitung des Auftrages ablehnt, mittels zufälliger Auswahl einen anderen Server-Datenbearbeitungsknoten der Gruppe zur Bearbeitung des Auftrages ausgewählt und ansonsten dem ausgewählten Server-Datenbearbeitungsknoten den Auftrag zur Bearbeitung zuteilt.

8. Computerlesbares Speichermedium, auf dem ein Programm abgespeichert ist, das so ausgestaltetet ist, daß es die Zuteilung von Aufträgen an Server-Datenbearbeitungsknoten einer Gruppe von zwei oder mehreren Server-Datenbearbeitungsknoten zur Bearbeitung steuert,
wobei das Programm so ausgestaltetet ist, daß es, wenn es einen Auftrag zu vergeben hat, zuerst denjenigen Server-Datenbearbeitungsknoten aus der Gruppe auswählt, der gemäß einer vordefinierten zyklischen Reihenfolge der Server-Datenbearbeitungsknoten der nächste auszuwählende Server-Datenbearbeitungsknoten ist, **dadurch gekennzeichnet daß** es, wenn der zuerst ausgewählte Server-Datenbearbeitungsknoten die Bearbeitung des Auftrages ablehnt, mittels zufälliger Auswahl einen anderen Server-Datenbearbeitungsknoten der Gruppe zur Bearbeitung des Auftrages auswählt, und ansonsten dem ausgewählten Server-Datenbearbeitungsknoten den Auftrag zur Bearbeitung zuteilt.

## Claims

1. Method for allocating tasks, which come from one or more client data manipulation nodes (C1 to C5), to one of the server data manipulation nodes within a group of two or more server data manipulation nodes (S1 to S4) for processing in each case, a client data manipulation node which has a task to allocate first selecting from the group the server data manipulation node which is the next server data manipulation node for selection according to a predefined cyclic sequence of the server data manipulation nodes, **characterized in that** if the first selected server data manipulation node declines the processing of the task, another server data manipulation node of the group is randomly selected by the client data manipulation node for processing the task, and otherwise the task is passed by the client data manipulation node to the selected server data manipulation node for processing.

2. Method according to Claim 1, **characterized in that** if the randomly selected server data manipulation node declines to process the task, repeated random selection attempts follow to select another server data manipulation node for processing the task, which is then allocated to this server data manipulation node.

3. Method according to one of Claims 1 or 2, **characterized in that** the client data manipulation node first selects from the group the server data manipulation node which according to a predefined cyclic sequence of server data manipulation nodes is the next server data manipulation node for selection compared to the last server data manipulation node to which a task was passed by this client data manipulation node for processing.

4. Method according to one of Claims 1 or 2, **characterized in that** the client data manipulation node first selects from the group the server data manipulation node which according to a predefined cyclic sequence of server data manipulation nodes is the next server data manipulation node for selection compared to the last server data manipulation node to which a task was passed by one of the client data manipulation nodes for processing.

5. Method according to one of Claims 1 or 2, **characterized in that** the client data manipulation node first selects from the group the server data manipulation node which according to a predefined cyclic sequence of server data manipulation nodes is the next server data manipulation node for selection compared to the last server data manipulation node which was cyclically selected by this client data manipulation node.

6. Method according to one of Claims 1 or 2, **characterized in that** the client data manipulation node first selects from the group the server data manipulation node which according to a predefined cyclic sequence of server data manipulation nodes is the next server data manipulation node for selection compared to the last server data manipulation node which was cyclically selected by one of the client data manipulation nodes.

7. Data processing system (DPS) with one or more client data manipulation nodes (C1 to C5), which are developed such that they request the processing of tasks by server data manipulation nodes (S1 to S4), and with a group of two or more server data manipulation nodes (S1 to S4), which are developed such that they process tasks which are allocated to them for processing by the server data manipulation nodes (S1 to S4), each of the client data manipulation nodes (C1 to C5) being equipped with an assignment unit (ALL), which is developed such that for a task to be assigned by the respective client data manipulation node the assignment unit (ALL) first selects from the group the server data manipulation node which according to a predefined cyclic sequence of server data manipulation nodes is the next server data manipulation node for selection, **characterized in that** if the first selected server data manipulation node declines the processing of the task, the assignment unit (ALL) randomly selects another server data manipulation node of the group for processing the task, and otherwise allocates the task to the selected server data manipulation node for processing.

8. Computer-readable storage medium, on which a program is stored, which is developed such that it controls the allocation of tasks to server data manipulation nodes of a group of two or more server data manipulation nodes for processing, the program being developed such that when it has a task to allocate it first selects from the group the server data manipulation node which according to a predefined cyclic sequence of server data manipulation nodes is the next server data manipulation node for selection, **characterized in that** if the first selected server data manipulation node declines the processing of the task, the program randomly selects another server data manipulation node of the group for processing the task, and otherwise allocates the task to the selected server data manipulation node for processing.

## Revendications

1. Procédé permettant l'allocation de tâches qui proviennent d'un ou de plusieurs noeuds clients de traitement de données (C1 à C5) dans un groupe d'au moins deux noeuds serveurs de traitement de données (S1 S4) respectivement à l'un des noeuds serveurs de traitement de données en vue du traitement de celles-ci, un noeud client de traitement de données qui doit attribuer une tâche, choisit d'abord le noeud serveur de traitement de données du groupe qui, conformément à une séquence cyclique prédéfinie des noeuds serveurs de traitement de données, est le prochain noeud serveur de traitement de données à choisir, **caractérisé en ce que**, si le noeud serveur de traitement de données d'abord choisi rejette le traitement de la tâche, un autre noeud serveur de traitement de données du groupe est choisi par le noeud client de traitement de données au moyen d'un choix aléatoire en vue du traitement de la tâche, et sinon la tâche est transmise par le noeud client de traitement de données au noeud serveur de traitement de données choisi en vue du traitement de celle-ci.

2. Procédé selon la revendication 1, **caractérisé en ce que**, si le noeud serveur de traitement de données choisi au moyen d'un choix aléatoire rejette le traitement de la tâche, il essaie de façon répétée au moyen d'un choix aléatoire de choisir un autre noeud serveur de traitement de données en vue du traitement de la tâche et alloue la tâche à celui-ci en vue de son traitement.

3. Procédé selon l'une quelconque des revendications 1 ou 2, **caractérisé en ce que** le noeud client de traitement de données choisi d'abord le noeud serveur de traitement de données du groupe qui, conformément à une séquence cyclique prédéfinie des noeuds serveurs de traitement de données par rapport au dernier noeud serveur de traitement de données auquel une tâche a été transmise par ce noeud client de traitement de données en vue du traitement de celle-ci, est le prochain noeud serveur de traitement de données à choisir.

4. Procédé selon l'une quelconque des revendications 1 ou 2, **caractérisé en ce que** le noeud client de traitement de données choisit d'abord le noeud serveur de traitement de données du groupe qui, conformément à une séquence cyclique prédéfinie des noeuds serveurs de traitement de données par rapport au dernier noeud serveur de traitement de données auquel a été transmise une tâche provenant de l'un des noeuds clients de traitement de données en vue du traitement de celle-ci, est le prochain noeud serveur de traitement de données à choisir.

5. Procédé selon l'une quelconque des revendications 1 ou 2, **caractérisé en ce que** le noeud client de traitement de données choisit d'abord le noeud serveur de traitement de données du groupe qui, conformément à une séquence cyclique prédéfinie des noeuds serveurs de traitement de données par rapport au dernier noeud serveur de traitement de données qui a été choisi de façon cyclique par ce noeud client de traitement de données, est le prochain noeud serveur de traitement de données à choisir.

6. Procédé selon l'une quelconque des revendications 1 ou 2, **caractérisé en ce que** le noeud client de traitement de données choisit d'abord le noeud serveur de traitement de données du groupe qui, conformément à une séquence cyclique prédéfinie des noeuds serveurs de traitement de données par rapport au dernier noeud serveur de traitement de données qui a été choisi de façon cyclique par un noeud client de traitement de données, est le prochain noeud serveur de traitement de données à choisir.

7. Système de traitement de données (DPS) avec un ou plusieurs noeuds clients de traitement de données (C1 à C5) qui sont formés, de sorte qu'ils adressent une requête de traitement des tâches par des noeuds serveurs de traitement de données (S1 à S4) et avec un groupe d'au moins deux noeuds serveurs de traitement de données (S1 S4) qui sont formés, de sorte qu'ils traitent les tâches qui leur sont allouées par les noeuds serveurs de traitement de données (S1 à S4) en vue du traitement de celles-ci, chacun des noeuds clients de traitement de données (C1 à C5) étant respectivement doté d'une unité d'attribution (ALL) qui est formée de sorte qu'il choisisse d'abord, pour une tâche à attribuer par le noeud client de traitement de données respectif, le noeud serveur de traitement de données du groupe qui, conformément à une séquence cyclique prédéfinie des noeuds serveurs de traitement de données, est le prochain noeud serveur de traitement de données à choisir, **caractérisé en ce que**, si le noeud serveur de traitement de données d'abord choisi rejette le traitement de la tâche, il choisit un autre noeud serveur de traitement de données du groupe au moyen d'un choix aléatoire en vue du traitement de la tâche et sinon il alloue la tâche au noeud serveur de traitement de données choisi en vue du traitement de celle-ci.

8. Support de stockage lisible par ordinateur, sur lequel est sauvegardé un programme qui est formé, de sorte qu'il commande l'allocation des tâches à des noeuds serveurs de traitement de données d'un groupe d'au moins deux noeuds serveurs de traitement de données en vue du traitement de celles-ci,
le programme étant formé de sorte qu'il choisisse d'abord, s'il doit attribuer une tâche, le noeud serveur de traitement de données du groupe qui, conformément à une séquence cyclique prédéfinie des noeuds serveurs de traitement de données, est le prochain noeud serveur de traitement de données à choisir, **caractérisé en ce que**, si le noeud serveur de traitement de données d'abord choisi rejette le traitement de la tâche, il choisit un autre noeud serveur de traitement de données du groupe au moyen d'un choix aléatoire en vue du traitement de la tâche, et sinon il alloue la tâche au noeud serveur de traitement de données choisi en vue du traitement de celle-ci.
